(19) **Europäisches Patentamt / European Patent Office / Office européen des brevets**

(11) **EP 2 983 964 B1**

(12) **FASCICULE DE BREVET EUROPEEN**

(45) Date de publication et mention de la délivrance du brevet:
**06.09.2017 Bulletin 2017/36**

(21) Numéro de dépôt: **14721445.6**

(22) Date de dépôt: **31.03.2014**

(51) Int Cl.:
**B62D 15/02** (2006.01)

(86) Numéro de dépôt international:
**PCT/FR2014/050765**

(87) Numéro de publication internationale:
**WO 2014/167211 (16.10.2014 Gazette 2014/42)**

(54) **STRATEGIE DE PARKING EN CRENEAU PAR UNE TRAJECTOIRE EN COURBURE CONTINUE**

PARALLEL-EINPARKEN STRATEGIE MIT EINER TRAJEKTORIE MIT DURCHGEHENDEN KRÜMMUNG

PARALLEL PARKING STRATEGY USING A CONTINUOUS CURVED TRAJECTORY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2013 FR 1353228**

(43) Date de publication de la demande:
**17.02.2016 Bulletin 2016/07**

(73) Titulaire: **Renault s.a.s.**
**92100 Boulogne-Billancourt (FR)**

(72) Inventeurs:
• **VOROBIEVA, Hélène**
  **F-92210 Saint-Cloud (FR)**
• **MINOIU-ENACHE, Nicoleta**
  **F-78000 Versailles (FR)**
• **GLASER, Sébastien**
  **F-78330 Fontenay-le-Fleury (FR)**

(56) Documents cités:
**DE-A1- 19 940 007      DE-A1-102005 058 809**
**DE-A1-102009 027 289   US-A1- 2010 204 866**

**Description**

La présente invention concerne le domaine des aides au parking pour véhicules automobiles, et plus particulièrement des systèmes d'aide au parking entièrement automatique pour la réalisation de manoeuvres de parking de type créneau.

La réalisation des manoeuvres en créneau est souvent une source de stress, par la difficulté de réalisation de ces manoeuvres, pouvant être liée à l'appréciation de différents paramètres de réalisation de ces manoeuvres que sont notamment, l'adéquation de la place de stationnement avec la longueur du véhicule, le positionnement initial du véhicule, l'enchaînement des manoeuvres de stationnement,... pouvant également entraîner des risques de dégradation du véhicule en manoeuvre et des véhicules bordant la place de parking visée.

De plus, l'immobilisation temporaire de la voie de circulation est également une source de stress par la gêne occasionnée pour les autres automobilistes.

Il a déjà été proposé, par les demandes FR12-57793 et FR12-58536 au nom du déposant, une proposition de parking automatique en créneau d'un véhicule par une succession de trajectoires formées d'arcs de cercle, se basant donc sur les méthodes géométriques de planification de la trajectoire. Toutefois, ces méthodes nécessitent que le changement de direction soit réalisé à l'arrêt, ce qui provoque un effort important sur la colonne de direction, ainsi qu'une usure localisée des pneumatiques, la rotation des roues directionnelles étant effectuée sans déplacement desdites roues.

La présente invention vise ainsi à améliorer ces différentes manoeuvres, et vise notamment à l'adaptation d'une méthode géométrique quelconque, telles par exemple celles décrites dans les demandes FR12-57793 et FR12-58536, en obviant les problèmes mentionnés. US2010204866 A1 est considéré comme l'art antérieur le plus proche et révèle les caractéristiques du préambule de la revendication 1. L'invention vise principalement à définir une trajectoire par des arcs de cercle, ou à utiliser une trajectoire déjà définie par des arcs de cercle, et à transformer cette trajectoire en une trajectoire avec des rayons de courbure continus, tout en respectant les points de départ et d'arrivée. Cette trajectoire peut être formée de plusieurs manoeuvres, une manoeuvre étant définie comme une séquence de différents braquages sans changement du signe de la vitesse, afin d'amener le véhicule dans une place de parking préalablement identifiée. Pour ce faire, l'invention utilise des clothoïdes.

Il est connu, par le document US 7,469,765 le parking en une manoeuvre selon une séquence à courbure continue de cinq courbes dont la deuxième et la quatrième sont des clothoïdes, la troisième et la cinquième étant des arcs de cercles. Un tel document ne permet pas le parking en plusieurs manoeuvres. Par ailleurs, la dernière séquence étant un arc de cercle, les roues ne sont pas redressées à la fin de la manoeuvre.

On connait également, par le brevet US 20070282503, le parking en une manoeuvre, où certaines parties de la trajectoire peuvent être des clothoïdes, mais la trajectoire n'est pas forcément complètement à courbure continue.

Un autre but de l'invention est de présenter une manoeuvre entièrement automatique, où le conducteur n'intervient pas dans les manoeuvres de stationnement, le véhicule pouvant même être inoccupé lors des manoeuvres.

La présente invention est atteinte à l'aide d'une méthode de tracé de trajectoire de parking d'un véhicule selon les caractéristiques de la revendication 1. Selon d'autres caractéristiques de l'invention :

- la vitesse de rotation des roues est constante, tout comme la vitesse de déplacement du véhicule pendant la rotation desdites roues.
- les rayons des arcs de cercle entre deux clothoïdes sont tous identiques,
- lors du parcours de la première clothoïde, le véhicule débute avec les roues dans l'axe longitudinal et termine avec les roues braquées selon le rayon de courbure défini de l'arc de cercle à suivre,
- lors du parcours de la seconde clothoïde, le véhicule débute avec les roues braquées selon le rayon de courbure défini de l'arc de cercle qui l'a précédé, et se termine avec les roues dans l'axe longitudinal,
- le paramètre A de la clothoïde est déterminé par la vitesse de rotation des roues, ainsi que par la vitesse de déplacement du véhicule.

D'autres caractéristiques et avantages de l'invention apparaîtront mieux à la lecture de la description suivante, en référence aux figures annexées parmi lesquelles :

- les figures 1 et 2 sont des représentations d'un véhicule et des différentes notations associées,
- la figure 3 est une figure explicative d'un déplacement selon une clothoïde,
- la figure 4 montre une séquence de planification de trajectoire selon l'invention,
- la figure 5 est un exemple de parking en une seule manoeuvre selon l'invention.

La présente invention se rapporte aux manoeuvres en créneau permettant de garer un véhicule le long d'une voie de circulation. La trajectoire que le véhicule doit suivre pour se garer prend en compte les contraintes du véhicule (notamment les dimensions, angles de braquage maximaux) et les contraintes de l'environnement (dimensions de la place de parking, non collision avec les autres véhicules garés lors des manoeuvres).

La présente invention suppose qu'un calcul et qu'une mémorisation du tracé (x,y) de la trajectoire à suivre, selon une méthode géométrique basée sur des arcs de cercle successifs est réalisée, tel que le décrit par exemple la demande de brevet FR12-57793 ou FR12-58536. Il est également supposé et admis que l'emplacement de parking, dans un repère global, ainsi que les dimensions de la place de parking sont connus ou déterminés par des capteurs après un passage du véhicule devant ladite place de parking libre. Si les capteurs ne permettent pas de calculer la profondeur de la place, mais que l'on sait d'une quelconque manière qu'il est possible de garer le véhicule à cet emplacement (par exemple par le fait que d'autres véhicules sont garés à côté), on supposera la profondeur égale à la largeur du véhicule.

A partir du tracé (x-y) de la trajectoire, le principe général de l'invention est de transformer chaque arc de cercle, excepté le premier, en une courbe de rayon de courbure continu, ayant les mêmes points de départ et d'arrivée (x,y) que l'arc de cercle en question. Les arcs de cercle calculés sont donc un outil de calcul des courbes de rayon de courbure continu qu'elle remplace pour le déplacement réel du véhicule. Ces arcs représentent ainsi une ossature de construction, notamment dans la définition des points à rejoindre.

Chaque courbe est constituée de trois parties :

- courbe permettant de passer d'un rayon de courbure infini à une courbe de rayon de courbure constant défini (arc de cercle),

- courbe de rayon de courbure constant défini (arc de cercle), le rayon de courbure étant le rayon de braquage minimal admissible pour le véhicule,

- courbe permettant de passer d'un rayon de courbure constant défini (arc de cercle) à une courbe de rayon de courbure infini.

La courbe permettant de passer d'un rayon de courbure infini à une courbe de rayon de courbure constant défini ou vice versa est une clothoïde. Le véhicule peut réaliser une telle trajectoire clothoïdique (condition suffisante mais non nécessaire) en roulant à une vitesse constante avec une vitesse de braquage constante.

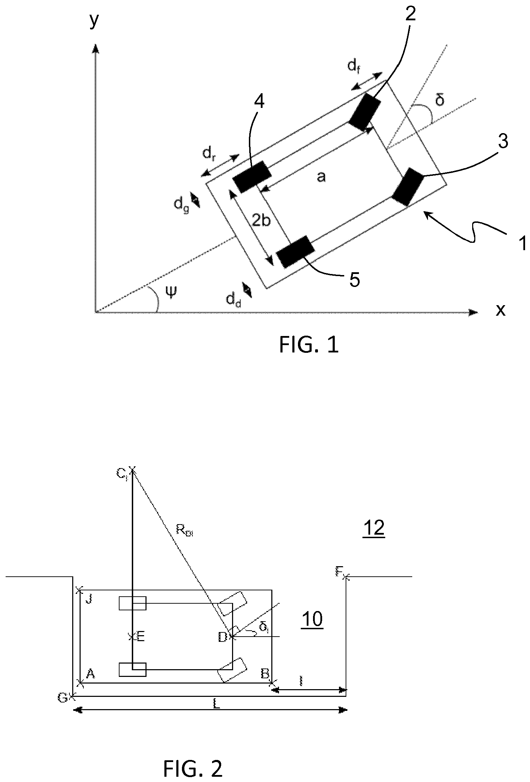

Le véhicule pris comme exemple d'application de l'invention, tel que présenté figure 1, est un véhicule 1 de type automobile, à traction, entraîné par un moteur (non représenté), comportant quatre roues 2 à 5 (roue avant gauche 2, roue avant droite 3, roue arrière gauche 4 et roue arrière droite 5), les roues avant étant les roues directrices.

Les caractéristiques de dimensionnement du véhicule sont nécessaires pour les différents calculs de trajectoire. On se reportera avantageusement aux demandes de brevet FR12-57793 ou FR12-58536 pour un calcul détaillé des trajectoires. On définit ainsi :

- $a$ : l'empattement du véhicule

- $2b$ : la voie du véhicule,

- $d_f$ : Porte à faux avant du véhicule

- $d_r$ : Porte à faux arrière du véhicule

- $d_g$ : Distance entre les roues gauches et le côté gauche du véhicule

- $d_d$ : Distance entre les roues droites et le côté droit du véhicule

- $\delta$ : Angle que font les roues avant avec l'axe longitudinal du véhicule, $\delta_g$ et $\delta_d$ désignent respectivement $\delta$ lorsque le véhicule braque à gauche ou à droite

- $v$ : Vitesse longitudinale du véhicule

- $\Psi$ : Angle de cap du véhicule dans un repère absolu (x, y),

- $E$ : milieu de l'essieu arrière,

- $C$ : Centre des cercles utilisés. $C_l$ et $C_r$ désignent respectivement les centres lorsque le braquage se fait à gauche et à droite. $C_{min}$ désigne un centre correspondant à $R_{min}$, un rayon minimum, lorsque le sens du braquage n'est pas indiqué.

Le véhicule est ainsi schématisé comme un rectangle où les points J, A et B définissent respectivement les coins arrière gauche, arrière droit et avant droit du véhicule, en référence à la figure 2. On définit également le point D qui est le point milieu de l'essieu avant du véhicule.

Les centres instantanés de rotation du véhicule sont notés $C_l$ ou $C_r$, selon que les roues du véhicule sont braquées à gauche ou à droite.

La place de parking est définie par sa longueur L, la valeur l correspondant à la différence entre la longueur de la place de parking et la longueur du véhicule.

Selon l'invention, on considère une trajectoire de parking formée d'arcs de cercle, par exemple comme dans les demandes de brevets déposées sous les numéros FR12-57793 et FR12-58536. On souhaite transformer cette trajectoire en une trajectoire avec rayons de courbure continus. On étudie les trajectoires pour le milieu de l'essieu arrière E. Ainsi, lorsqu'on parle de rayon R de braquage du véhicule, il s'agit alors de la distance entre le centre de rotation et le point E du véhicule.

Afin d'obtenir une trajectoire avec rayons de courbure continus à partir des arcs de cercle, on remplace chaque arc de cercle *Aext* par la séquence suivante :

- Clothoïde *C*: les roues sont initialement droites (rayon de courbure infini) et la clothoïde se termine avec le rayon de courbure désiré,

- Arc de cercle intérieur *Aint* : le rayon de courbure de cet arc est celui obtenu en fin de clothoïde,

- Clothoïde inversée *Ci* : Le rayon de courbure est initialement celui correspondant à l'arc de cercle précédent et la fin de la clothoïde se termine avec les roues droites (rayon de courbure infini).

Cette méthode implique que l'angle $\mu$ entre l'orientation du véhicule au point final de la séquence et la tangente à *Aext* soit une constante dépendant uniquement du paramètre de *C*. Il s'agit du critère $\mu$-tangence cité dans la littérature, par exemple dans l'article « Continuous-curvature path planning for car-like vehicles », dans Proc. of IEEE-RSJ Int. Conf. on Intelligent Robots and Systems, Grenoble, Septembre 1997. Comme on choisira ce paramètre de manière à profiter au mieux des capacités du véhicule (c'est-à-dire établir une trajectoire avec des rayons les plus petits possibles), cela implique que $\mu$ sera constant pour tous les arcs de cercle *Aext.* Par conséquent le rayon des arcs de cercle extérieur devra être identique pour toute la trajectoire et ce rayon sera noté $R_1$, le plus petit possible.

Par ailleurs, on souhaite que le rayon de l'arc de cercle intérieur soit de rayon minimal. Si l'on nomme $R_{minl}$ et $R_{minr}$ les rayons respectifs pour le braquage maximal respectivement à gauche et à droite, alors le rayon minimal de braquage, noté $R_{min}$ est égal à la valeur maximale entre et $R_{minl}$ et $R_{minr}$.

Par définition, une clothoïde est caractérisée par son paramètre A défini par $A^2 = R.L$, où R est l'inverse de la courbure en chaque point et L la longueur de la clothoïde en chaque point.

Dès lors, pour une valeur $R = R_{min}$, pour un véhicule roulant à une vitesse maximale désirée $v_{maxdesired}$, le paramètre A est défini par $A^2 = R_{min}.L_{min}$, où $L_{min}$ est la longueur minimale de la clothoïde admissible pour le véhicule pour passer d'une valeur de braquage des roues de 0 à $\delta_{max}$.

Si l'on considère $v_\delta$ la vitesse maximale désirée de rotation des roues, $v_{maxdesired}$ la vitesse maximale désirée longitudinale du véhicule, $\delta_{max}$ l'angle des roues correspondant à $R_{min}$, alors le temps t nécessaire pour tourner les roues de 0 à $\delta_{max}$ est : $t = \dfrac{\delta_{max}}{v_\delta}$. Par la suite, la longueur minimale $L_{min}$ parcourue par le véhicule braquant ses roues de 0 à $\delta_{max}$ est $L_{min} = v_{maxdesired}.t$.

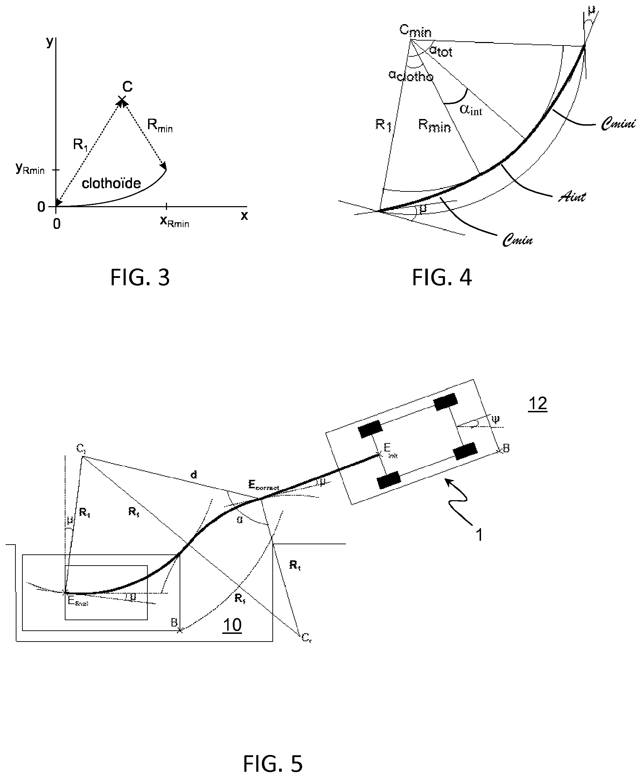

En référence à la figure 3, si le départ de la clothoïde se fait en (0,0) avec le véhicule orienté dans le sens positif de l'axe des abscisses, le centre C du cercle intérieur est alors donné par les formules classiques des clothoïdes :

$$x_C = x_{R\min} - R_{\min} \sin \tau$$

$$y_C = y_{R\min} - R_{\min} \cos \tau$$

Avec $\tau = \dfrac{L^2}{2A^2}$

Ce centre du cercle intérieur sera par la suite noté $C_{min}$ lorsqu'il sera calculé pour le rayon $R_{min}$.

De plus, les coordonnées (x,y) de chaque point de la clothoïde sont définies par les relations :

$$x = A\sqrt{\pi}\,C_f\left(\frac{L}{\pi A}\right)$$

et

$$y = A\sqrt{\pi}\,S_f\left(\frac{L}{\pi A}\right)$$

Avec $C_f$ et $S_f$ les intégrales de Fresnel définies par :

$$C_f(x) = \int_0^x \cos\frac{\pi}{2}u^2\,du \text{ , et } S_f(x) = \int_0^x \sin\frac{\pi}{2}u^2\,du \text{ .}$$

Le paramètre $\mu$ peut également se déduire par : $\mu = \arctan(x_C/y_C)$.

Pour connaitre C ainsi que les coordonnées de divers points de la trajectoire situés sur des portions de clothoïdes, on est amené à calculer les intégrales de Fresnel. Ces intégrales peuvent s'écrire sous forme de série entière. Les coordonnées (x,y) de chaque point de la clothoïde peuvent alors s'écrire :

$$x = \sum_{n=0}^{\infty} \frac{(-1)^n L^{4n+1}}{(2n)!(4n+1)(\sqrt{2}A)^{4n}}$$

$$y = \sum_{n=0}^{\infty} \frac{(-1)^n L^{4n+3}}{(2n+1)!(4n+3)(\sqrt{2}A)^{4n+2}}$$

Une bonne approximation des coordonnées peut être faite en limitant n à des valeurs faibles, par exemple 10.

La planification de la trajectoire de parking, à partir des méthodes géométriques utilisant des arcs de cercle, telles celles décrites dans les demandes FR12-57793 et FR12-58536 nécessite toutefois que les rayons des arcs de cercle utilisés doivent être égaux à $R_1$, et non au rayon minimum.

De plus, si l'on définit par $\theta_{but}$ l'orientation du véhicule souhaitée à la fin d'une manoeuvre, le véhicule est alors situé sur un arc de cercle extérieur de centre C. Or avec la contrainte de $\mu$-tangence, la pose du véhicule n'est donc pas tangente au cercle comme ce serait le cas avec une méthode géométrique avec arcs de cercle. Le centre du cercle a donc subi une rotation d'angle $-\mu$ et de centre $E_{but}$ par rapport au centre du cercle avec la méthode géométrique. Ainsi, à partir d'une planification géométrique initiale avec arcs de cercle de la trajectoire de parking, il faut modifier en conséquence le calcul des centres instantanés de rotation du véhicule.

Une fois cette planification réalisée, on remplace chaque arc de cercle *Aext* par la séquence suivante, en référence à la figure 4 :

- Clothoïde *Cmin* : de paramètre précédemment calculé A et de longueur $L_{min}$, en commençant avec un rayon de courbure nul et finissant par un rayon de courbure $1/R_{min}$

- Arc de cercle *Aint* de rayon $R_{min}$

- Clothoïde inversée *Cmini* : de paramètre précédemment calculé A et de longueur $L_{min}$, en commençant avec un rayon de courbure $1/R_{min}$ et finissant par un rayon de courbure nul

On peut associer un angle $\alpha_{tot}$ à *Aext,* ainsi qu'un angle $\alpha_{clotho}$ à chaque clothoïde (calcul en se servant du théorème d'Al-Kashi) :

$$\alpha_{clotho} = \arccos \frac{x_{R\min}{}^2 + y_{R\min}{}^2 + R_1{}^2 - R_{\min}{}^2}{-2R_1 R_{\min}}$$

On en déduit alors l'angle $\alpha_{int}$ à parcourir sur *Aint* :

$$\alpha_{int} = \alpha_{tot} - 2\alpha_{clotho}$$

En référence à la figure 5, le point de départ du premier arc de cercle doit être de rayon $R_1$ afin de respecter le critère de la $\mu$-tangence. Ceci nécessite que le véhicule se déplace en ligne droite, vers l'avant ou vers l'arrière, comme dans le cas représenté, à partir du point $E_{init}$, correspondant à la position initiale du véhicule, jusqu'à ce qu'il se trouve sur un cercle de rayon $R_1$ convenant au reste de la trajectoire. Soit $E_{correct}$, la position de ce point.

Le théorème d'Al-Kashi dans le triangle $(C_l\text{-}C_r\text{-}E_{correct})$ est alors appliqué, qui donne l'équation suivante à résoudre :

$3R_1{}^2 - d^2 + 2d.R_1 \cos\alpha = 0$, où sont utilisées les valeurs suivantes :

$$d = \sqrt{(x_{Cl} - x_{Ecorrect})^2 + (y_{Cl} - y_{Ecorrect})^2}$$

$$\alpha = \arccos \frac{|y_{Ecorrect} - y_{Cl}|}{d} - \mu + \psi_{Einit}$$

$$y_{Ecorrect} = y_{Einit} - x_{Ecorrect} \tan\psi_{Einit}$$

Il est à noter que la méthode ne peut pas être utilisée si la valeur de $\alpha_{tot}$ est inférieure à $2\alpha_{clotho}$. Toutefois, dans ce cas de figure, il est possible, soit en modifiant A et L et gardant les rayons de courbure respectivement finaux et initiaux de respectivement *Cmin* et *Cmini,* soit en modifiant L et ces rayons de courbure et gardant A, de former deux nouvelles clothoïdes symétriques de telle sorte qu'en les parcourant, on obtienne l'équation $\alpha_{tot} = 2\alpha_{newclotho}$.

La mise en oeuvre pratique de cette méthode nécessite que le véhicule soit équipé de différents systèmes automatiques pour commander le braquage des roues, l'accélération, le freinage, le changement de vitesse, notamment pour changer la direction d'avancement du véhicule. Il doit en outre être équipé d'un ou plusieurs capteurs permettant de mesurer au moins la longueur de la place de parking lorsqu'on passe à côté d'elle, par exemple un capteur ultra-son, un radar ou une caméra. Dans le cas où les capteurs présents ne permettent pas de mesurer la profondeur de la place de parking, le véhicule doit être pourvu d'un système permettant de déduire que l'emplacement est bien un emplacement de parking (ex : caméra avec détection de véhicules adjacents, interface utilisateur avec question de possibilité de parking,...). Le véhicule doit également comporter un ou plusieurs capteurs permettant de mesurer les distances depuis l'avant et l'arrière du véhicule jusqu'à l'obstacle le plus proche (ex : mur, véhicule de derrière), par exemple caméra, capteur ultra-son ou télémètre laser.

Un calculateur permet de gérer et stocker ces différentes informations.

Afin de rendre compte des possibilités de parking au conducteur, le véhicule sera préférentiellement équipé d'une interface graphique ou vocale.

Ainsi la présente invention adapte une méthode géométrique quelconque pour obtenir une trajectoire à courbure continue.

On peut citer les avantages suivants de la présente invention :

- On bénéficie des trajectoires de parking créées par des méthodes géométrique. Ainsi il n'y a pas de contrainte sur le point de départ du véhicule, le véhicule peut être garé automatiquement du moment que la place de parking peut contenir le véhicule. Le parking en plusieurs manoeuvres est possible.

- Toute méthode où la trajectoire de parking est formée d'arcs de cercles, peut être transformée en trajectoire à courbure continue selon la présente invention.

- La trajectoire créée par la présente invention est à courbure continue. Le véhicule n'a pas besoin de s'arrêter pour réorienter ses roues. Ceci permet un gain de temps et une usure plus faible des pneus et de la colonne de direction.

- Le tracé de la trajectoire est tel qu'à la fin de la manoeuvre, les roues du véhicule sont redressées, ce qui facilitera les futures manoeuvres automatiques ou manuelles pour notamment sortir de la place de parking.

- Un tracé (x,y) de la trajectoire est généré. Ainsi de nombreuses stratégies de suivi de trajectoire peuvent être appliquées, sans contrainte sur une stratégie particulière.

**Revendications**

1. Méthode de tracé de trajectoire de parking d'un véhicule (1) depuis une voie de circulation (12) vers un emplacement libre de parking (10), par une ou des manoeuvres de type créneau, comprenant les étapes successives suivantes :

   - détermination de la longueur (L) de l'emplacement libre (10),
   - détermination d'une trajectoire optimale de déplacement du véhicule (1) par des arcs de cercle successifs, présentant un rayon identique R1, **caractérisée en ce qu'**elle comporte, suite aux étapes précédentes, une étape de transformation d'au moins un des arcs de cercle déterminés aux étapes précédentes, en une courbe de rayon de courbure continu, ayant les mêmes points de départ et d'arrivée que l'arc de cercle qu'elle remplace, la courbe de rayon de courbure continue est constituée de trois parties : une clothoïde $C_{min}$, un arc de cercle $A_{int}$ et une clothoïde $C_{mini}$, l'arc de cercle $A_{int}$ étant réalisé selon un rayon de courbure $R_{min}$ inférieur au rayon R1.

2. Méthode selon la revendication précédente, **caractérisée en ce que** la vitesse de rotation des roues est constante, tout comme la vitesse de déplacement du véhicule pendant la rotation desdites roues.

3. Méthode selon l'une des revendications précédentes, **caractérisée en ce que** les rayons $R_{min}$ des arcs de cercle entre deux clothoïdes sont tous identiques.

4. Méthode selon la revendication précédente, **caractérisée en ce que**, lors du parcours de la première clothoïde $C_{min}$, le véhicule débute avec les roues dans l'axe longitudinal et termine avec les roues braquées selon le rayon de courbure $R_{min}$ défini de l'arc de cercle à suivre.

5. Méthode selon la revendication précédente, **caractérisée en ce que**, lors du parcours de la seconde clothoïde $C_{mini}$, le véhicule débute avec les roues braquées selon le rayon de courbure $R_{min}$ défini de l'arc de cercle qui l'a précédé, et se termine avec les roues dans l'axe longitudinal.

6. Méthode selon l'une des revendications précédentes, **caractérisée en ce qu'**un paramètre A de la clothoïde est déterminé par la vitesse de rotation des roues, ainsi que par la vitesse de déplacement du véhicule.

**Patentansprüche**

1. Verfahren zum Bestimmen einer Einparktrajektorie eines Fahrzeugs (1) von einer Fahrspur (12) zu einem freien Parkplatz (10) durch ein oder mehrere Manöver vom Typ des Längseinparkens, das die folgenden aufeinanderfolgenden Schritte aufweist:

   - Bestimmen der Länge (L) des freien Platzes (10),
   - Bestimmen einer optimalen Fahrttrajektorie des Fahrzeugs (1) durch aufeinanderfolgende Kreisbögen, die einen identischen Radius R1 aufweisen, **dadurch gekennzeichnet, dass** es nach den vorhergehenden Schritten einen Schritt des Umwandelns von mindestens einem der Kreisbögen, die in den vorhergehenden Schritten bestimmt werden, in eine Radiuskurve mit durchgehender Krümmung aufweist, die die gleichen Ausgangs- und Endpunkte wie der Kreisbogen, den sie ersetzt, aufweist, wobei die Radiuskurve mit durchgehender Krümmung aus drei Teilen gebildet ist: einer Klothoide $C_{min}$, einem Kreisbogen $A_{int}$ und einer Klothoide $C_{mini}$, wobei der Kreisbogen $A_{int}$ nach einem Krümmungsradius $R_{min}$ durchgeführt wird, der kleiner als der Radius R1 ist.

2. Verfahren nach dem vorhergehenden Anspruch, **dadurch gekennzeichnet, dass** die Drehzahl der Räder konstant ist, ebenso wie die Bewegungsgeschwindigkeit des Fahrzeugs während des Drehens der Räder.

3. Verfahren nach einem der vorhergehenden Ansprüche, **dadurch gekennzeichnet, dass** die Radien $R_{min}$ der Kreis-bögen zwischen zwei Klothoiden alle identisch sind.

4. Verfahren nach dem vorhergehenden Anspruch, **dadurch gekennzeichnet, dass** das Fahrzeug während des Befahrens der ersten Klothoide $C_{min}$ mit den Rädern in der Längsachse beginnt und mit den Rädern, die nach dem Krümmungsradius $R_{min}$, der von dem Kreisbogen definiert wird, dem zu folgen ist, eingeschlagen sind, endet.

5. Verfahren nach dem vorhergehenden Anspruch, **dadurch gekennzeichnet, dass** das Fahrzeug während des Befahrens der zweiten Klothoide $C_{mini}$ mit den Rädern, die nach dem Krümmungsradius $R_{min}$, der von dem Kreis-bogen definiert wird, der ihm vorhergegangen ist, eingeschlagen sind, beginnt und mit den Rädern in der Längsachse endet.

6. Verfahren nach einem der vorhergehenden Ansprüche, **dadurch gekennzeichnet, dass** ein Parameter A der Klothoide durch die Drehzahl der Räder sowie durch die Bewegungsgeschwindigkeit des Fahrzeugs bestimmt wird.

**Claims**

1. Method for tracing a parking trajectory of a vehicle (1) from a traffic lane (12) to a vacant parking slot (10), through one or more manoeuvres of parallel parking type, comprising the following successive steps:

   - determination of the length (L) of the vacant slot (10),
   - determination of an optimal trajectory of displacement of the vehicle (1) via successive circular arcs, exhibiting an identical radius R1, **characterized in that** it comprises, subsequent to the preceding steps, a step of transforming at least one of the circular arcs determined in the preceding steps into a curve with continuous radius of curvature, having the same starting and finishing points as the circular arc that it replaces, the curve with continuous radius of curvature is made up of three parts: a clothoid *Cmin,* a circular arc *Aint* and a clothoid *Cmini,* the circular arc *Aint* being effected according to a radius of curvature Rmin that is smaller than the radius R1.

2. Method according to the preceding claim, **characterized in that** the speed of rotation of the wheels is constant, as is the speed of displacement of the vehicle during the rotation of the said wheels.

3. Method according to one of the preceding claims, **characterized in that** the radii $R_{min}$ of the circular arcs between two clothoids are all identical.

4. Method according to the preceding claim, **characterized in that**, while traversing the first clothoid *Cmin,* the vehicle begins with the wheels in the longitudinal axis and ends with the wheels deflected according to the defined radius of curvature $R_{min}$ of the circular arc to follow.

5. Method according to the preceding claim, **characterized in that**, while traversing the second clothoid *Cmini,* the vehicle begins with the wheels deflected according to the defined radius of curvature $R_{min}$ of the circular arc which preceded it, and ends with the wheels in the longitudinal axis.

6. Method according to one of the preceding claims, **characterized in that** a parameter A of the clothoid is determined by the speed of rotation of the wheels, as well as by the speed of displacement of the vehicle.

FIG. 1

FIG. 2

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1257793
- FR 1258536

- US 2010204866 A1
- US 7469765 B
- US 20070282503 A

**Littérature non-brevet citée dans la description**

- Continuous-curvature path planning for car-like vehicles. *Proc. of IEEE-RSJ Int. Conf. on Intelligent Robots and Systems, Grenoble,* Septembre 1997